# EUROPEAN PATENT SPECIFICATION

(11) **EP 2 442 487 B1**
(45) Date of publication and mention of the grant of the patent: **26.10.2016**
(21) Application number: 10785671.8
(22) Date of filing: 23.03.2010
(51) Int. Cl.: H04L 12/24, H04L 29/08, H04W 4/02, H04L 29/12

(54) **LOCATION PROCESSING METHOD**
STANDORTVERARBEITUNGSVERFAHREN
PROCÉDÉ DE TRAITEMENT DE LOCALISATION

(30) Priority: 11.06.2009 CN 200910149021
(43) Date of publication of application: 18.04.2012
(73) Proprietor: ZTE Corporation, Shenzhen, Guangdong 518057 (CN)
(72) Inventor: WU, Yan, Guangdong 518057 (CN)
(74) Representative: Garratt, Peter Douglas
(86) International application number: PCT/CN2010/071229
(87) International publication number: WO 2010/142158

(56) References cited:
- CN-A- 101 090 417
- CN-A- 101 163 147
- US-A1- 2007 077 922
- "3rd Generation Partnership Project; Technical Specification Group Core Network and Terminals; Open Service Access (OSA); Parlay X Web Services; Part 9: Terminal location (Release 8)", 3GPP STANDARD; 3GPP TS 29.199-9, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.0.0, December 2008 (2008-12), pages 1-29, XP050372065,
- "3rd Generation Partnership Project; Technical Specification Group Core Network and Terminals; Open Service Access (OSA); Parlay X Web Services; Part 13: Address list management (Release 8)", 3GPP STANDARD; 3GPP TS 29.199-13, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.0.1, June 2008 (2008-06), pages 1-40, XP050372120,
- "3rd Generation Partnership Project; Technical Specification Group Core Network and Terminals; Open Service Access (OSA); Parlay X Web Services; Part 9: Terminal location (Release 8)", 3GPP STANDARD; 3GPP TS 29.199-9, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.1.0, September 2009 (2009-09), pages 1-34, XP050372066,

## Description

### Filed of the Invention

The present invention relates to the communication filed, and specifically relates to a location processing method and an address duplication processing method and apparatus based on an integrated service access gateway.

### Background of the Invention

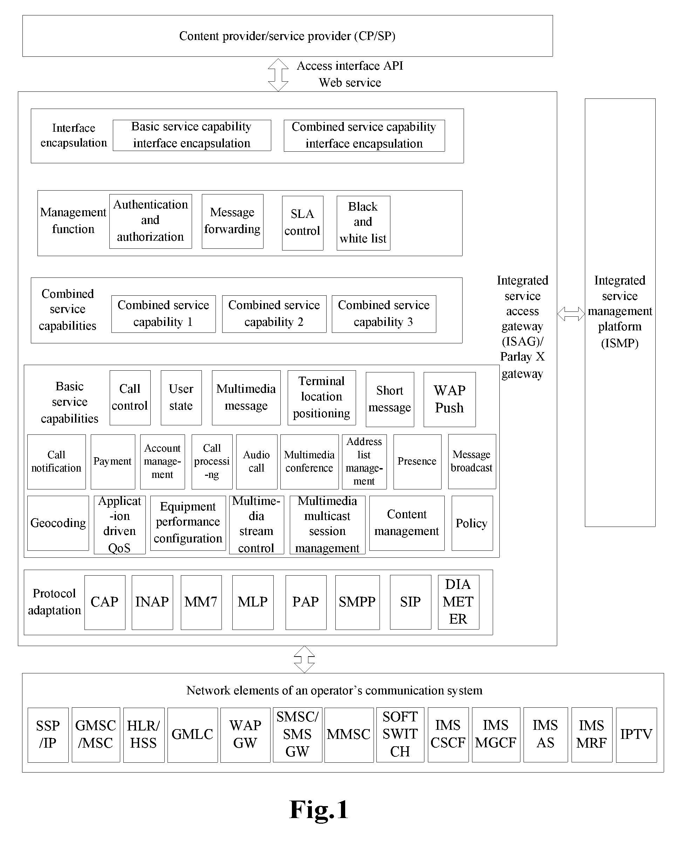

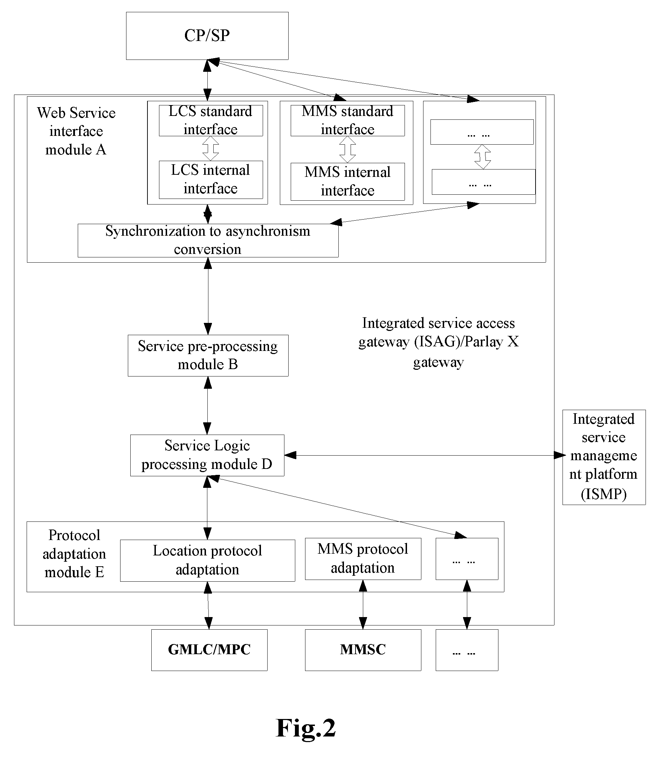

At present, in the architecture of a service capability access platform, a Parlay X interface plays a very important role. The Parlay X interface is a set of Application Programming Interfaces (API) for operators to make their service capabilities accessible, and is provided as an interface to web services. The Parlay X interface is standardized to form stable and unified service invocations and to mask the complex structure of a network bottom layer, such that a Content Provider (CP)/a Service Provider (SP) could perform service combination and re-development rapidly. A platform for masking bottom layer telecommunication service capabilities is realized according to different versions of the Parlay X interface, and the platform is called as an integrated service access gateway or a Parlay X gateway. Fig. 1 is a schematic diagram of a logical layered structure of a service capability access platform according to the related art. As shown in Fig. 1, the Integrated Service Access Gateway (ISAG)/Parlay X gateway encapsulates bottom layer telecommunication services, for example, basic service capabilities such as call control, short messages, multimedia messages, terminal location positioning, streaming media control, presence, audio call, and multimedia conferences, and corresponding combined service capabilities, and makes a unified Web Services Description Language (WSDL) interface accessible for the CP/SP to invoke. The CP/SP can rapidly develop a variety of services according to these basic or combined telecommunication capabilities to satisfy demands of users. A detailed introduction of the relevant part of Fig. 1 will be made in conjunction with Fig. 2 hereinafter.

Currently, it is generally required to perform terminal location positioning for multiple terminals simultaneously. Fig. 2 is a schematic diagram of a functional module for realizing a terminal location positioning capability in an integrated service access gateway/a Parlay X gateway according to the related art. As shown in Fig. 2, the integrated service access gateway (ISAG)/Parlay X gateway comprises: a Web Service interface module A, a service pre-processing module B, a service logic processing module D, a protocol adaptation module E, a Gateway Mobile Location Center (GMLC)/a Mobile Positioning Center (MPC), and an MMS Center (MMSC), wherein the Web Service interface module A comprises: an LCS standard interface (location service standard interface), an LCS internal interface, a Multimedia Messaging Service (MMS) standard interface, an MMS internal interface, etc; and the protocol adaptation module E comprises: a location protocol adaptation module, an MMS protocol adaptation module, etc. In addition, in Fig.2 an Integrated Services Management Platform (ISMP) is also comprised.

It needs to be explained that Address Duplication referred to hereinafter includes duplication of users' device addresses, duplication of users' telephone numbers, or duplication of users' identifier addressing. The presenting mode of the address may be a Universal Resource Identifier (URI), a user equipment URI, a Session Initiation Protocol (SIP) URI (e.g., sip:abc@def.com), a telephone (TEL) URI (e.g., tel: 12345678), a physical address of a user equipment, or the like.

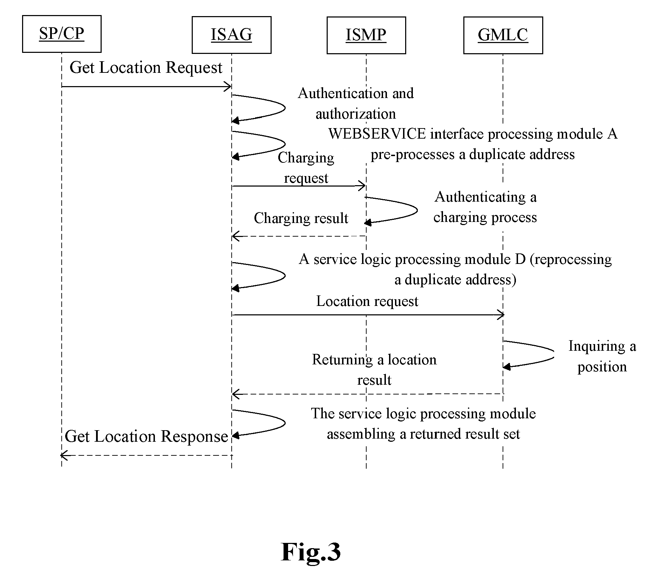

Fig. 3 is a flow chart of a location flow of an integrated service access gateway/a Parlay X gateway according to the related art. As shown in Fig. 3, the SP/CP sends location requests (Get Location Requests) to the ISAG; after the ISAG performs authentication and authorization, the WEB SERVICE interface processing module A pre-processes duplicate addresses; the ISAG sends a charging request to the ISMP, and the ISMP returns a charging result after authenticating the charging; the service logic processing module D processes the duplicate addresses again; the ISAG sends location requests to the GMLC ; the GMLC returns location results after querying locations; the service logic processing module D assembles a set of the returned results; and the ISAG returns location data (get Location Response) to the SP/CP.

From the processing of Fig. 3, it can be concluded that, at present, the processing of address duplication of the users in the terminal location positioning service in the integrated service access gateway/Parlay X gateway is realized as follows: when Location Service (LCS) positioning standard interface requests in the Web Service are converted into LCS location internal interface requests, first pre-processing is performed, for example, filtering out obviously duplicate and error users, and then the specific processing is performed in the service logic processing module D. As such, with the service traffic increasing, the service processing speed realized by the above processing process will be lowered.

Moreover, in the current flow, the relevant processing policies are realized in codes, and dynamic policy modification can not be realized. Therefore, the demand of dynamic policy modification by the operators can not be met, which results in that the efficiency of system development is decreased and a performance bottleneck exists.

Non-patent document "3^{rd} Generation Partnership Project; Technical Specification Group Core Network and Terminals; Open Service Access (OSA); Parlay X Web Services; Part 9: Terminal location (Release 8)" discloses a method for location processing.

### Summary of the Invention

The invention is defined by claims 1 and 6.

The present invention is proposed in view of the problems of a low efficiency of system development and a low service processing speed resulting from processing user address duplication in an ISAG in the related art. Therefore, the present invention provides an improved location processing solution to solve above problem.

There is provided a location processing method based on an integrated service access gateway according to one aspect of the present invention.

The location processing method based on the integrated service access gateway/Parlay X gateway according to the present invention, wherein the integrated service access gateway/Parlay X gateway provides a network service interface, and the method comprises: receiving location operation requests for multiple terminals, wherein the location operation requests are location requests simultaneously initiated for addresses of the multiple terminals; and the integrated service access gateway/Parlay X gateway returning, in a situation that address duplication occurs in the addresses of the multiple terminals, policy duplication abnormality and/or location results via the network service interface.

The integrated service access gateway/Parlay X gateway judges the location operation requests according to a service policy, wherein if the address duplication is not allowed, the policy of address duplication abnormality is used; and preferably, the location service policy is that whether a location operation supports the address duplication.

The integrated service access gateway/Parlay X gateway processes the location operation requests according to a predetermined address duplication processing policy, and preferably, the predetermined address duplication processing policy at least comprises one of the following: a first predetermined policy, a second predetermined policy, and a third predetermined policy; wherein the first predetermined policy comprises: for a first address in a duplicate address sequence, sending the location request corresponding to the first address to a location center, receiving the location result returned by the location center, generating the policy duplication abnormality for a subsequent duplicate address, and returning the location result and/or the policy duplication abnormality; the second predetermined policy comprises: for duplicate addresses, generating a new address sequence based on further parsing by a service logic processing module, sending location requests each corresponding to each address in the new address sequence to the location center, and receiving the returned location results; and the third predetermined policy comprises: performing abnormality processing for the location operation requests and returning the policy duplication abnormality.

Preferably, in a case that the duplicate addresses are a telephone resource identifier or a session initiation protocol resource identifier which does not support a globally unified resource identifier, the above method also comprises: judging whether terminals to which the duplicate addresses belong are terminals of a same user, wherein if it is determined to be yes, the location operation requests are processed according to the second predetermined policy.

Preferably, in a case that the duplicate addresses comprise a unique physical address of a terminal or a session initiation protocol resource identifier which supports a globally unified resource identifier, the location operation requests are processed according to the third predetermined policy.

Preferably, the above method also comprises: if the number of the location operation requests where duplicate addresses occur exceeds a predetermined threshold, an anti-fraud policy is initiated.

There is also provided a location processing method based on an integrated service access gateway according to one aspect of the present invention.

The location processing method based on the integrated service access gateway according to the present invention, wherein the integrated service access gateway comprises a network service interface module and a service logic processing module, and the method comprises: the integrated service access gateway receiving location operation requests for multiple terminals, wherein the location operation requests are location requests simultaneously initiated for addresses of the multiple terminals; the service logic processing module judging whether address duplication occurs to the addresses of the multiple terminals prior to processing the location operation requests; if the result of the judgment is yes, the service logic processing module forwarding the location operation request to a location center and/or performing abnormity processing for the location operation requests according to a predetermined policy, wherein policy duplication abnormality is generated after the abnonnity processing is performed for the location operation requests; the location center receiving the location operation requests from the service logic processing module, processing the location operation request, and sending a location result to the service logic processing module; and the service logic processing module receiving the location result from the location center, and returning the policy duplication abnormality and/or the location result.

There is provided an address duplication processing method based on an integrated service access gateway according to another aspect of the present invention.

The address duplication processing method based on the integrated service access gateway according to the present invention, wherein the integrated service access gateway/Parlay X gateway provides a network service interface, and the above method comprises: receiving service request messages of multiple terminals, wherein the service request messages are service requests simultaneously initiated for addresses of the multiple terminals; and the integrated service access gateway/Parlay X gateway returning policy duplication abnormality and/or a service processing result via the network service interface in a case that address duplication occurs to the addresses of the multiple terminals.

The integrated service access gateway/Parlay X gateway judges the service operation requests according to a service policy, wherein if the address duplication is not allowed, the policy of address duplication abnormality is used; preferably, the service policy being whether a service operation supports the address duplication.

The integrated service access gateway/Parlay X gateway processes the location operation requests according to a predetermined address duplication processing policy, and preferably, the predetermined address duplication processing policy at least comprises one of the following: a first predetermined policy, a second predetermined policy, and a third predetermined policy; wherein the first predetermined policy comprises: for a first address in a duplicate address sequence, forwarding a service request message corresponding to the first address, receiving the returned service processing result, generating the service abnormality for subsequent duplicate addresses, and returning the service processing result and/or the service abnormality; the second predetermined policy comprises: for a duplicate address, generating a new address sequence based on a further parsing of the service logic processing module, forwarding service request messages corresponding to each address in the new address sequence, and receiving the returned service processing result; and the third predetermined policy comprises: performing abnormity processing on the service request messages and returning the service abnormality.

Preferably, in a case that the duplicate address is a telephone resource identifier or a session initiation protocol resource identifier which does not support a globally unified resource identifier, the above method also comprises: judging whether terminals to which the duplicate addresses belong are a terminal of a same user, and if it is determined to be yes, processing the service request messages according to the second predetermined policy.

Preferably, in a case that the duplicate addresses comprise a unique physical address of a terminal or a session initiation protocol resource identifier which supports a globally unified resource identifier, the service request message is processed according to the third predetermined policy.

There is provided a location processing apparatus according to still another aspect of the present invention.

The location processing apparatus according to the present invention, located in an integrated service access gateway, comprising: a receiving unit, configured to receive location operation requests of multiple terminals, wherein the location operation requests are location requests initiated simultaneously for addresses of the multiple terminals; a detecting unit, configured to detect whether a duplicate address occurs in the addresses of the multiple terminals; and a processing unit, configured to process the location operation requests and return policy duplication abnormality and/or a location result.

Preferably, the processing unit comprises: a sending module, configured to send a location request corresponding to non-duplicate addresses to a location center and obtain the location results; an abnormality processing module, configured to perform abnormality processing for the duplicate address and generate the policy duplication abnormality; and an output module, configured to output the location result and/or the policy duplication abnormality.

Preferably, the processing unit comprises: a judging module, configured to judge whether the terminals to which the duplicate address belongs are terminals of a same user, wherein the duplicate address is a telephone resource identifier or a session initialization protocol resource identifier which does not support a globally unified resource identifier; a service execution module, configured to send location requests corresponding to each address of the duplicate address to the location center and obtain a location result; and an outputting module, configured to output the location result.

Preferably, the processing unit is configured to perform abnormality processing on the location operation request and return a location abnormality, wherein the duplicate address comprises a unique physical address of a terminal or a session initiation protocol resource identifier which supports a globally unified resource identifier.

Preferably, the above apparatus also comprises: a counter, configured to count the number of location operation requests for the duplicate address; and a security control unit, configured to initiate an anti-fraud policy in a case that a counted value of the counter exceeds a predetermined threshold.

There is provided an address duplication processing apparatus based on an integrated service access gateway according to yet another aspect of the present invention.

The address duplication processing apparatus based on the integrated service access gateway according to the present invention, located in the integrated service access gateway, comprising: a first receiving module, configured to receive service request messages of multiple terminals, wherein the service request messages are service requests simultaneously initiated for addresses of the multiple terminals; a first detecting module, configured to detect whether address duplication occurs in the addresses of the multiple terminals; and a first processing module, configured to process the service request messages according to a predetermined address duplication processing policy and return service abnormality and/a service processing result.

By the present invention, a function of policy control and processing user's address duplication is added into an ISAG service logic processing module to policy control and process the case of address duplication, which solves the problems of low system developing efficiency and low service processing speed resulting from the processing of user's address duplication in the ISAG, and further achieves the effects of improving the execution efficiency of the location service, shortening the response time, and improving the efficiency of developing.

### Brief Description of the Drawings

The drawings illustrated herein provide a further understanding of the present invention, and form a part of the present application. The illustrative embodiments of the present invention and the description thereof are used to explain the present invention without duly limiting the present invention, wherein:
Fig. 1 is a schematic diagram of a logical layered structure of a service capability access platform according to the related art;
Fig. 2 is a schematic diagram of a functional module for realizing terminal location positioning capability in an integrated service access gateway/Parlay X gateway according to the related art;
Fig. 3 is a flowchart of a flow of positioning an integrated service access gateway/a Parlay X gateway according to the related art;
Fig. 4 is a schematic diagram of an integrated service access gateway/Parlay X gateway added with a user address duplication policy control and processing function according to an embodiment of the present invention;
Fig. 5 is a flowchart of a location processing method according to Embodiment 1 of the present invention;
Fig. 6 is a flowchart of positioning an integrated service access gateway/Parlay X gateway according to Example 1 of the embodiments of the present invention, wherein a location result and an address duplication abnormality event are returned;
Fig. 7 is a flowchart of positioning an integrated service access gateway/Parlay X gateway according to Example 2 of the embodiments of the present invention, wherein location results of multiple terminals for a same user address are returned;
Fig. 8 is a flowchart of positioning an integrated service access gateway/Parlay X gateway according to Example 3 of the embodiments of the present invention, wherein an address duplication abnormality event is returned;
Fig. 9 is a flowchart of positioning an integrated service access gateway/Parlay X gateway according to Example 4 of the embodiments of the present invention, wherein a notification of fraud event and address duplication abnormality event is returned;
Fig. 10 is a structural block diagram of a location processing apparatus according to an embodiment of the present invention;
Fig. 11 is a structural block diagram of a location processing apparatus according to Example 1 of a preferred embodiment of the present invention;
Fig. 12 is a structural block diagram of a location processing apparatus according to Example 2 of a preferred embodiment of the present invention;
Fig. 13 is a structural block diagram of a location processing apparatus according to Example 4 of a preferred embodiment of the present invention;
Fig. 14 is a flowchart of an address duplication processing method according to Method Embodiment 2 of the present invention; and
Fig. 15 is a structural block diagram of an address duplication processing apparatus according to Apparatus Embodiment 2 of the present invention.

### Detailed Description of the Preferred Embodiments

### Functional Overview

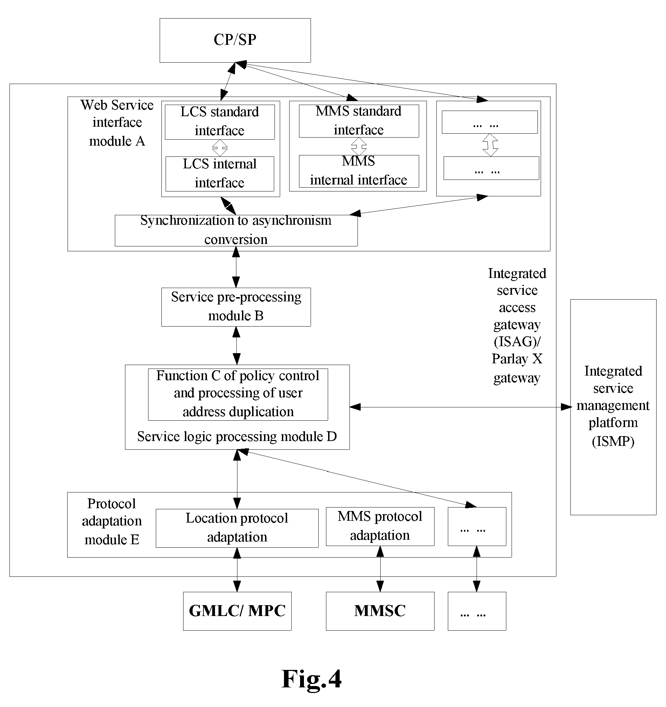

An improved location processing solution is provided in the embodiments of the present invention, in consideration of the problems of a low efficiency of system development and a low service processing speed resulting from processing user address duplication in an ISAG in the related art. Fig. 4 is a schematic diagram of an integrated service access gateway/Parlay X gateway added with a user address duplication policy control and processing function according to an embodiment of the present invention. As shown in Fig. 4, a service logic processing module of the integrated service access gateway/Parlay X gateway is added with the user address duplication policy control and processing function C so as to perform policy control and processing in case of duplicate addresses.

It should be noted that the embodiments of the present invention are location processing used for the integrated service access gateway. However, for other services where the address duplication might occur, such as short message service and multimedia message service, solutions similar to the principle of the embodiments of the present invention can also be used for processing, wherein Method Embodiment 1 is used for processing location requests and Method Embodiment 2 is used for processing other services where the address duplication occurs.

It should be explained that the embodiments of the present application and the features thereof can be combined with each other if there is no conflict. The present invention will be described in details with reference to the figures and in conjugation with the embodiments hereinafter.

### Method Embodiment 1

It should be explained that the steps shown in the flowcharts of the figures can be executed in a computer system such as a set of computer-executable instructions. Moreover, although logical sequences are shown in the flowcharts, the steps shown or described may be executed in sequences different from those presented herein in some cases.

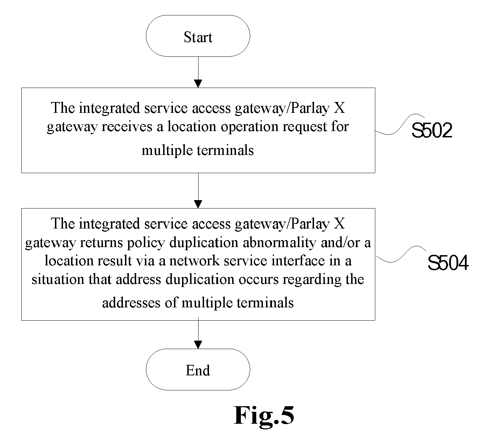

According to an embodiment of the present invention, a location processing method based on an integrated service access gateway is provided. Fig. 5 is a flowchart of the location processing method according to the embodiment of the present invention. As shown in Fig. 5, the method comprises the following Step S502 to Step S504.

Step S502: location operation requests of multiple terminals are received, wherein the location operation requests are location requests initiated simultaneously for the addresses of the multiple terminals, and wherein the location operation requests can be Get Location For Group, Start Geographical Notification, Start Periodic Notification, etc. The location operation requests can come from an SP/CP or other third party applications. It should be noted that the Start Geographical Notification and the Start Periodic Notification include processing for a group address, and thus address duplication also occurs, which can be handled by the present embodiment. In the following description, explanation is made by taking the location request as an example; however, the protection scope is not limited thereto.

Step S504: the integrated service access gateway/Parlay X gateway processes the location operation requests via a service logic processing module. The service logic processing module processes the location operation requests according to a predetermined address duplication processing policy and returns policy duplication abnormality and/or the positioning results in the case that duplication of the addresses of the multiple terminals occurs.

In the present embodiment, the policy control and processing of the address duplication is performed by adding a user address duplication policy control and processing function to the service logic processing module of the integrated service access gateway, which solves the problems of the low efficiency of system development and the low service processing speed resulting from processing user address duplication in an integrated service access gateway, and further achieves effects of improving the execution efficiency of the location service, shortening response time, and improving the efficiency of development.

As for the case of user address duplication, a policy set by telecommunication operators can be the following processing; i.e., the predetermined address duplication processing policy in Step S504 may include one or more of the following policies: a first predetermined policy, a second predetermined policy, and a third predetermined policy. The three policies will be described hereinafter in detail.

### The first predetermined policy

As for a first address in a duplicate address sequence, a location request (invoking a location service capability) corresponding to the first address is sent to a location center (i.e., the integrated service access gateway/Parlay X gateway initiates the location operation request to the location center, and the location center can be either a GMLC or an MPC), and a location result (also called as location data) returned by the location center is received.

Meanwhile, abnormality processing is performed on the location requests corresponding to a subsequent duplicate address (meanwhile, no location request is initiated to the location center), and policy duplication abnormality is generated The ISAG sends the location result of the first address and the policy duplication abnormality of the duplicate address to the SP/CP or other third party applications.

### The second predetermined policy

As for the duplicate addresses, a new address sequence is generated based on further parsing by the service logic processing module, and location requests each corresponding to each address in the new address sequence are sent to the location center; the location center sends, after processing the location requests corresponding to the addresses, location results to the integrated service access gateway; and the integrated service access gateway forwards the location results to the CP/SP or other third party applications after receiving the location results.

### The third predetermined policy

The abnormality processing is directly performed for the location operation requests, and the policy duplication abnormal is returned.

It should be explained that the service logic processing module of the integrated service gateway selects different policies depending on different properties of the duplicate addresses, which will be described hereinafter by module of examples.

In a case that the duplicate addresses are TEL URIs or SIP URIs which do not support GRUU (globally unified resource identifier), it is judged that whether the terminals to which the duplicate addresses belong are terminals of a same user. If they are the terminals of the same user, the location operation requests are processed according to the second predetermined policy, i.e., a new address sequence being generated according to further parsing by the service logic processing module, a location request corresponding to each address in the new address sequence being sent to the location center, and returned location results being received; and then, the location results are sent to the SP/CP or other third party applications. When whether the terminals belong to the same user is to be judged, a user service database, a shared database or an address book database needs to be queried, for example, a Home Location Register (HLR), a Home Subscriber Server (HSS), a shared profile Extensible Markup Language (XML) Document Management Server (shared profile XDMS), a shared policy XML database (shared policy XDMS), a Personal Information Manager (PIM) address book, a Combined Address Book (CAB), etc.. Then, when it is determined that the user owns multiple terminals and the terminals have a same address URI, the integrated service access gateway may invoke, according to policies (for example, time, occasion, access user, and so on) set by the operator or by the user, a terminal location positioning service capability (i.e., sending the location request) simultaneously or sequentially for these terminals (part or all) of the accessed user.

If the duplicate address includes a session initiation protocol resource identifier supporting a globally unified resource identifier or a unique physical address of a terminals, a location operation request is processed according to the third predetermined policy: abnormality processing is performed on the location operation request and policy duplication abnormality is returned. That is, in the situation that the SIP URI supporting the GRUU or the unique physical address of a user equipment is duplicate, abnormality error processing (i.e., abnormality processing) is performed directly.

Preferably, if the number of the location operation requests where duplicate address occurs exceeds a predetermined threshold, the integrated service access gateway may also initiate an anti-fraud policy. That is, if address duplication occurs in multiple location requests from a same user (it is the situation that address duplication occurs for multiple times for the same user) or address duplication occurs in a large scale in multiple location requests from a same CP/SP or other third party application (the case that the address duplication occurs in a large scale for the CP/SP), the telecommunication operator can set a policy against CP/SP fraud, for example, prohibiting a request of the CP/SP or sending an alarming notice, etc..

For other address types not mentioned above, the first predetermined policy may be used, and the second or the third predetermined policy may be used according to actual situations.

In the present embodiment, by adding the user address duplication policy control and processing function to the service logic processing module of the integrated service access gateway, the policy control and processing is performed according to a specific situation of address duplication based on an corresponding policy, which solves the problems of the low efficiency of system development and the low service processing speed resulting from processing user address duplication in an integrated service access gateway, and further achieves effects of improving the execution efficiency of the location service, shortening response time, and improving the efficiency of development.

The realizing process of the embodiments of the present invention will be further described in detail in combination with the examples hereinafter.

### Example 1

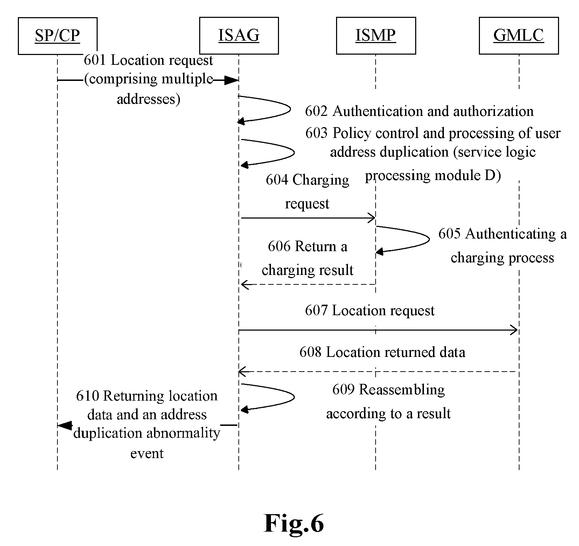

Fig. 6 is a flowchart of positioning an integrated service access gateway/Parlay X gateway according to Example 1 of the embodiments of the present invention, wherein a location result and an address duplication abnormality event are returned. The example is used for realizing the above case 1. As shown in Fig. 6, the flow comprises the following Step 601 to Step 610.

Step 601: a CP/SP sends a location operation request for users, i.e., a location request, such as Get Location For Group, Start Geographical Notification, Start Periodic Notification, and so on, to the ISAG/Parlay X gateway. The request comprises multiple user addresses.

Step 602: the ISAG/Parlay X gateway authenticates and authorizes the CP/SP. The request message continues to be sent after the authentication and the authorization is passed. If the authentication is not passed, abnormality is returned directly.

Step 603: the service logic processing module D of the ISAG/Parlay X gateway performs user address duplication policy control and processing. If address duplication occurs, a location service capability is invoked for the addresses with the duplicate ones being filtered out and the address duplication event is recorded based on a policy set by a telecommunication operator. That is, for a location request corresponding to a non-duplicate address, the ISAG/Parlay X gateway processes the location request corresponding to the address (i.e., the location request is sent to a location center, and Step 604 to Step 608 are the processing of the location service), and performs abnormality processing on the location request corresponding to the duplicate address).

Step 604: the ISAG/Parlay X gateway initiates a charging request to an integrated service management platform.

Step 605: the integrated service management platform (ISMP) executes authentication and charging, i.e., authenticating the charging.

Step 606: the integrated service management platform (ISMP) returns a charging result to the ISAG/Parlay X gateway.

It should be noted that the charging in Step 604 to Step 606 is directed to a requesting party of a location request message, for example, a certain CP/SP, rather than directed to a user terminal address in the request.

Step 607: the ISAG/Parlay X gateway initiates a location operation request, i.e., a location request, to the location center GMLC.

Step 608: the location center (GMLC) returns location data to the ISAG/Parlay X gateway.

Step 609: the ISAG/Parlay X gateway reassembles the location data and abnormality data according to the results and generates a location result set, for example, a multi-address location interface requests in a form of a user URI array a[0...n] when making a request, and a result array r[0...n] will be returned when returning a result. If a1, a5, and a8, upon being authenticated, are duplicate URIs, location result data (i.e., location results) are filled in r1, and duplication abnormality (i.e., policy duplication abnormality) will be filled in r5 and r8.

Step 610: the ISAG/Parlay X gateway returns the location result set (i.e., the location data and an address duplication abnormality event) to the CP/SP.

In the present example, the ISAG/Parlay X gateway performs policy control and processing in case of address duplication, which solves the problems of the low efficiency of system development and the low service processing speed resulting from processing user address duplication in the ISAG/Parlay X gateway, and further achieves effects of improving the execution efficiency of the location service, shortening response time, and improving the efficiency of development.

### Example 2

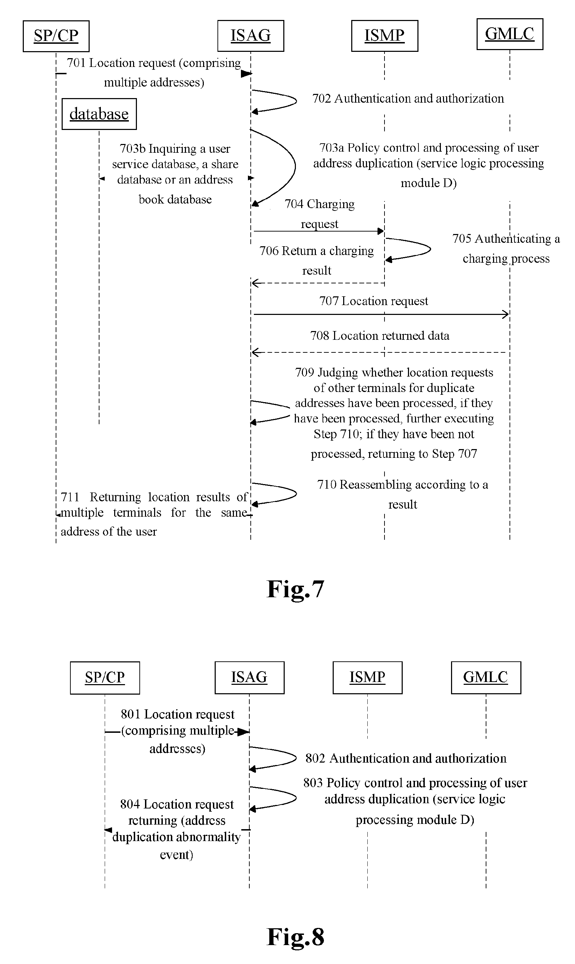

Fig. 7 is a flowchart of positioning an integrated service access gateway/Parlay X gateway according to Example 2 of the embodiments of the present invention, wherein location results of multiple terminals for a same user address are returned, and the example is used for realizing the above case 2. As shown in Fig. 7, the flow comprises the following Step 701 to Step 711.

Step 701 to Step 702 are the same as Step 601 to Step 602; thereby the description thereof is omitted.

Step 703a: the service logic processing module D of the ISAG/Parlay X gateway performs user address duplication policy control and processing. If address duplication occurs, a location service capability is continued to be invoked according to a policy set by a telecommunication operator after screening out the duplicate addresses. That is, for a location request corresponding to a non-duplicate address, the ISAG/Parlay X gateway processes the location request corresponding to the address. If the duplicate address is the address of a TEL URI or an SIP URI not supporting a GRUU, Step 703b is executed.

Step 703b: as for the address duplication of the TEL URI or an SIP URI which does not support GRUU (globally unified resource identifier), a user service database, a share database or an address book database is first queried, e.g., an HLR, an HSS, a shared profile XML database (a shared profile XDMS), a shared policy XML database (a shared policy XDMS), a personal information management address book (PIM), and a combined address book (CAB). When the user owns multiple terminals with a same address URI, the integrated service access gateway/Parlay X gateway may set for these terminals (part or all) of the user accessed in such a way as to simultaneously or sequentially invoke a terminal location positioning service capability (i.e., sending the location request) according to the policy set by the operator or the user (e.g. time, occasion, and access user), which is embodied in Steps 707, Step 708, and 709.

What needs to be explained is that, in this example, the queried databases belong to the ISAG/Parlay X gateway. However, the relevant policy might use other data, and these data may be written into a database by operators according to actual situations or required to use a data interaction interface between the ISAG/Parlay X gateway and other systems.

Step 704: the ISAG/Parlay X gateway initiates a charging request to the integrated service management platform.

Step 705: the integrated service management platform (ISMP) executes authentication and charging.

Step 706: the integrated service management platform (ISMP) returns a charging result to the ISAG/Parlay X gateway.

Step 707: the ISAG/Parlay X gateway selects one address from requested multiple terminal addresses and initiates a location operation request regarding the address for the location center (GMLC).

Step 708: the location center (GMLC) returns location data to the ISAG/Parlay X gateway.

Step 709: the ISAG/Parlay X gateway judges whether location requests for other terminals of a duplicate address have been processed. If they have not been processed, a location request for another terminal of the duplicate address is selected, and the execution of Step 707 and Step 708 is repeated, until all the location requests for all the terminals of the duplicate address have been processed. If all the location requests for all the terminals of the duplicate address have been processed, Step 710 is further executed.

Step 710: the ISAG/Parlay X gateway reassembles the location data according to a result to generate a location result set. For example, a multi-address location interface make a request in a form of a user URI array a[0...n], and a result array r[0...n] will be returned when returning a result. If a1, a5, and a8, upon being authenticated, are duplicate URIs, location result data (viz. location result) are filled in r1, and location result data of other terminals with the same address URI will be filled in r5 and r8.

Step 711: the ISAG/Parlay X gateway returns location results of the multiple terminals for a same address of a user, and the returned results contain location result data of the multiple addresses, i.e., including not only the location result data of the duplicate address but also the location result data of non-duplicate addresses.

In the present example, the ISAG/Parlay X gateway perform policy control and processing on the case of the address duplication, which solves the problems of the low efficiency of system development and the low service processing speed resulting from processing user address duplication in the ISAG/Parlay X gateway, and further achieves effects of improving the executing efficiency of the location service, shortening response time, and improving the efficiency of development.

### Example 3

Fig. 8 is a location flowchart of an integrated service access gateway/Parlay X gateway according to Example 3 of the embodiments of the present invention, wherein an address duplication abnormality event is returned. The example is used for realizing the above case III. As shown in Fig. 8, the process comprises the following Step 801 to Step 804.

Step 801 to Step 802 are the same as Step 601 to Step 602, thereby the description thereof is omitted.

Step 803: service logic processing module D of the ISAG/Parlay X gateway performs policy control and processing of user address duplication, if the address duplication occurs (or for the duplication of the SIP URI which supports the GRUU or the unique physical address of the terminal is duplicate), address duplication abnormality processing (i.e. abnormality processing) is performed according to the policy set by telecommunication operators.

Step 804: the ISAG/Parlay X gateway returns an address duplication abnormality event (i.e., policy duplication abnormality) to the CP/SP.

By the present Example 3, the integrated service access gateway provides an abnormality processing interface, and the abnormality processing can be performed on the duplicate address by the interface.

In the present example, the ISAG/Parlay X gateway perform policy control and processing on the case of the address duplication, and performs abnormality processing on the duplicate address via the abnormality processing interface of the ISAG/Parlay X gateway, which solves the problems of the low efficiency of system development and the low service processing speed resulting from processing user address duplication in the ISAG/Parlay X gateway to further achieve effects of improving the executing efficiency of the location service, shortening response time, and improve the efficiency of development.

### Example 4

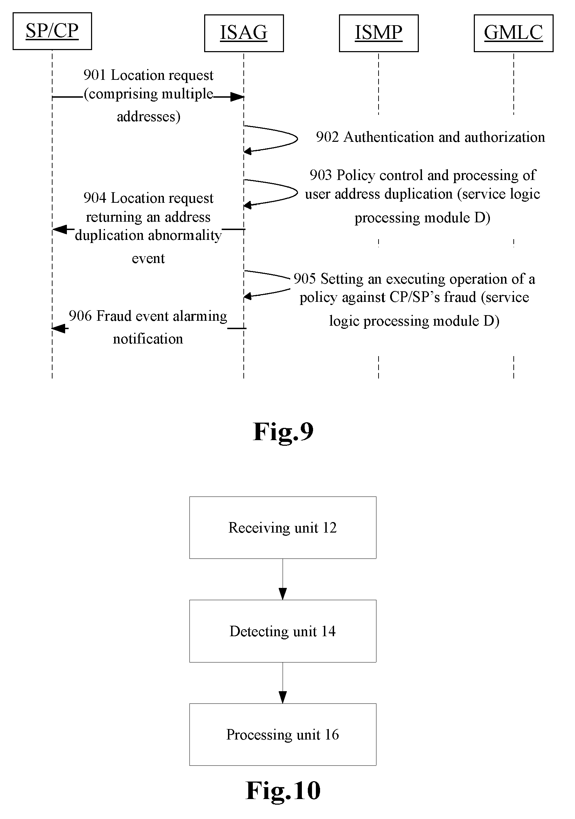

Fig. 9 is a location flowchart of an integrated service access gateway/Parlay X gateway according to Example 4 of the embodiments of the present invention, wherein a notification of address duplication abnormality event and fraud event is returned. The example is used for realizing the above case IV As shown in Fig. 9, the process comprises Step 901 to Step 906.

Step 901 to Step 902 are the same as Step 601 to Step 602, thereby the description thereof is omitted.

Step 903 to Step 904 are the same as Step 803 to Step 804, thereby the description thereof is omitted.

Step 905: as for the situation that multiple address duplication of the CP/SP occurs for the same user and the situation that duplication occurs in a large scale in requests of the CP/SP (exceeding a threshold set by the operators), i.e., if address duplication occurs in multiple location operation requests from the same user (the situation of multiple times of address duplication for the same user) or the case of address duplication occurs in a large scale in multiple location requests from a same CP/SP or other third part application, the telecommunication operators can set an executing procedure of a policy against CP/SP's fraud (i.e., initiating an anti-fraud policy).

Step 906: the ISAG/Parlay X gateway sends a fraud event alarm notification to the CP/SP.

In the embodiment of the present invention, user address duplication policy is controlled and processed in the service logic processing module when the terminal position is used for localizing telecommunication service capabilities in the ISAG/Parlay X gateway, thereby optimizing the executing efficiency of terminal position localizing service and shortening response time.

### Method Embodiment 2

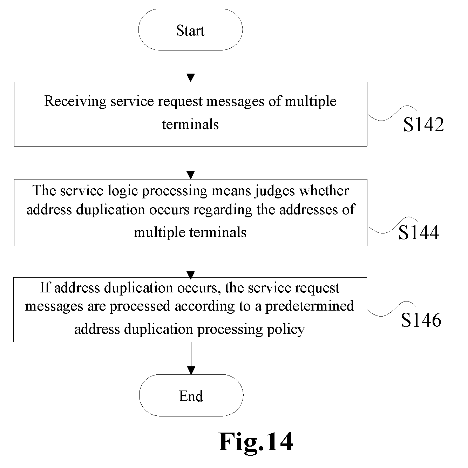

According to the embodiments of the present invention, an addresses duplication processing method based on an integrated service access gateway is provided; and the integrated service access gateway comprises a service logic processing module. Fig. 14 is a flowchart of an address duplication processing method according to Method Embodiment 2 of the present invention. As shown in Fig. 14, the flow includes the following Step S142 to Step S146.

Step S142: receive service request messages of multiple terminals, wherein the service request messages are service requests initiated simultaneously for the addresses of the multiple terminals. The service request messages can be from a CP/SP.

Step S144: the service logic processing module judges whether address duplication occurs in the addresses of the multiple terminals.

Step S146: if the address duplication occurs, the service request message is processed according to a predetermined address duplication processing policy and a service abnormality and/or a service processing result is returned.

In the present embodiment, the service logic processing module of the integrated service access gateway performs policy control and processing in case of address duplication, which solves the problems of the low efficiency of system development and the low service processing speed resulting from processing user address duplication in an integrated service access gateway, and further achieves effects of improving the execution efficiency of the location service, shortening response time, and improving the efficiency of development.

As for the situation of user address duplication, a policy set by telecommunication operators may be the following processing; i.e., the predetermined address duplication processing policy in Step S146 may include one or more of the following policies: a first predetermined policy, a second predetermined policy, and a third predetermined policy. The three policies will be described hereinafter in detail.

### The first predetermined policy

As for a first address in a duplicate address sequence, a service request corresponding to the first address is forwarded and a returned service processing result is received; and as for a subsequent duplicate address, service abnormality is generated, and a service processing result and service abnormality are returned.

### The second predetermined policy

As for the duplicate addresses, a new address sequence is generated based on further parsing by the service logic processing module; service requests each corresponding to each address in the new address sequence are forwarded; and a returned service processing result is received.

### The third predetermined policy

Abnormality processing is performed directly for service request messages and service abnormality is returned.

It should be explained that the service logic processing module of the integrated service gateway selects different policies depending on different properties of the duplicate addresses, which will be described hereinafter by module of examples.

If the duplicate addresses are telephone resource identifiers or a session initiation protocol resource identifiers which do not support a globally unified resource identifier, it is judged whether the terminals to which the duplicate addresses belong are terminals of a same user, wherein if they are the terminals of the same user, processing is performed according to the second predetermined policy, i.e., forwarding service requests each corresponding to each address of the duplicate addresses and receiving returned service processing results.

If the duplicate addresses comprise session initiation protocol resource identifiers which support globally unified resource identifiers or unique physical addresses of terminals, processing is performed according to the third predetermined policy, i.e., abnormality processing being performed on a service request message, and service abnormality is returned. In this situation, the integrated service access gateway does not forward the above service request.

What needs to be explained is that, the integrated service access gateway of the above embodiments provides duplication policy management and a duplication abnormality interface which are not available in the related art. In the related art, duplicate addresses are simply processed in respective interface receiving module or service logic processing module of various services. If the duplication policy is changed according to requirements, modification occurs in the places where the duplication is processed for each of the services. By the method of the above embodiments of the present invention, management and processing can be performed at a unified place, thereby improving the efficiency of development.

In the present invention, when other services comprising duplicate addresses are used in the ISAG/Parlay X gateway, policy control and processing user address duplication are performed in the service logic processing module, thereby optimizing the executing efficiency of terminal services and shortening response time.

### Apparatus Embodiment 1

According to the embodiments of the present invention, a location processing apparatus is provided. Preferably, the apparatus is located in an integrated service access gateway, wherein the apparatus can be located in the service logic processing module of the integrated service access gateway. Fig. 10 is a structural block diagram of the location processing apparatus according to the embodiments of the present invention. As shown in Fig. 10, the apparatus comprises: a receiving unit 12, a detecting unit 14, and a processing unit 16. The structure thereof will be described hereinafter in detail.

The receiving unit 12 is configured to receive location operation requests of multiple terminals, wherein the location operation requests are location requests initiated simultaneously for the addresses of the multiple terminals; the detecting unit 14, connected to the receiving unit 12, is configured to detect whether a duplicate address occurs in the addresses of the multiple terminals; and the processing unit 16, connected to the detecting unit 14, is configured to process the location operation requests and return policy duplication abnormality and/or a location result, and specifically, the processing unit 16 may perform subsequent processing according to different detection results of the detecting unit 14.

In the present embodiment, the policy control and processing is performed by the location processing apparatus of the integrated service access gateway in case of address duplication, which solves the problems of the low efficiency of system development and the low service processing speed resulting from processing user address duplication in an integrated service access gateway, and further achieves effects of improving the execution efficiency of the location service, shortening response time, and improving the efficiency of development.

The apparatus embodiment will be described hereinafter in detail in conjunction with the examples.

### Example 1

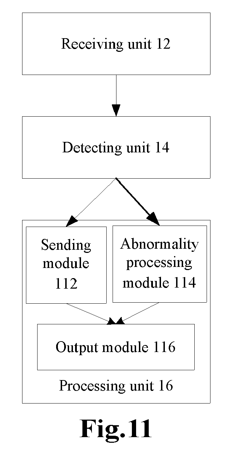

Fig. 11 is a structural block diagram of a location processing apparatus according to Example 1 of a preferable embodiment of the present invention. As shown in Fig. 11, the above processing unit 16 comprises: a sending module 112, an abnormality processing module 114, and an output module 116. Preferably, the apparatus is used for realizing Example 1 of the above method embodiments, and the structure thereof will be described hereinafter in detail.

The sending module 112 is configured to send a location request corresponding to a non-duplicate address to a location center and obtain the location result; the abnormality processing module 114 is configured to perform abnormality processing on the location request corresponding to a duplicate address and generate the policy duplication abnormality; the sending module 112 and the abnormality processing module 114 correspond to Step 603; the output module 116, connected to the sending module 112 and the abnormality processing module 114, is configured to output the location result and/or the policy duplication abnormality; and the abnormality processing module 114 correspond to Step 609.

In the present embodiment, the policy control and processing is performed by the abnormality processing module 114 of the integrated service access gateway in case of address duplication, which solves the problems of the low efficiency of system development and the low service processing speed resulting from processing user address duplication in an integrated service access gateway, and further achieves effects of improving the execution efficiency of the location service, shortening response time, and improving the efficiency of development.

### Example 2

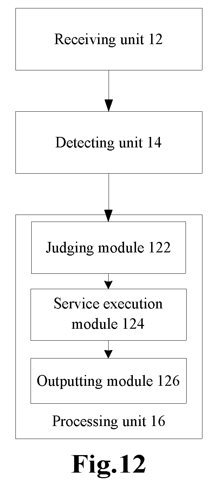

Fig. 12 is a structural block diagram of a location processing apparatus according to Example 2 of a preferable embodiment of the present invention. The apparatus of Example 2 is applied in a situation that multiple same addresses are the TEL URI or the SIP URI which does not support the globally unified resource identifier. As shown in Fig. 12, the above processing unit 16 comprises a judging module 122, a service execution module 124, and an outputting module 126. Preferably, the apparatus can be used for realizing Example 2 of the above method embodiments, and the structure thereof will be described hereinafter in detail.

The judging module 122 is configured to judge whether terminals to which the duplicate addresses belong are terminals of a same user; the service execution module 124, connected to the judging module 122, is configured to initiate a location request corresponding to each address of the duplicate addresses so as to obtain a location result in the situation that the judgment result of the judging module 122 is yes; the judging module 122 and the service execution module 124 correspond to Step 703b; the outputting module 126, connected to the service executing module 124, is configured to output the location result; and the outputting module 126 corresponds to Step 709.

In the present embodiment, the judging module 122 and the service executing module 124 perform policy control and processing in case of address duplication, thereby improving the location service executing efficiency, shortening response time, and raising the efficiency of development.

### Example 3

Preferably, the apparatus is used for realizing Example 3 of the above method embodiments. As for the apparatus of Example 3, in the situation that the duplicate addresses comprise the SIP URI which supports the globally unified resource identify or the unique physical address of the terminal or that address abnormality duplication processing is performed directly, the above processing unit is used for performing abnormality processing on the location operation request and returning location abnormality, which correspond to Step 803 to Step 804.

### Example 4

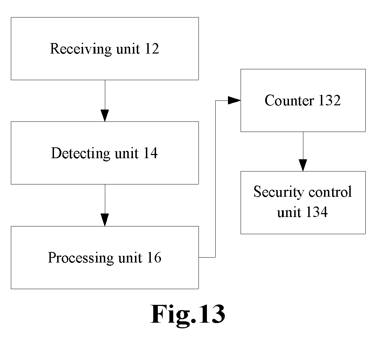

Fig. 13 is a structural block diagram of a location processing apparatus according to Example 4 of a preferable embodiment of the present invention. As shown in Fig. 13, the apparatus also comprises a counter 132 and a security control unit 134. Preferably, the apparatus may also be used for realizing Example 4 of the above method embodiments, and the structure thereof will be described hereinafter in detail.

The counter 132, connected to the processing unit 16, is configured to count the number of location operation requests for the duplicate addresses; the security control unit 134, connected to the counter 132, is configured to initiate an anti-fraud policy (for example, prohibiting the requests from the CP/SP or issuing an alarm) in a case that the counted value of the counter 132 exceeds a predetermined threshold; and the counter 132 and the security control unit 134 correspond to Step 905.

In the present embodiment, policy control and processing in case of address duplication are achieved by the cooperation of the counter 132, the security control unit 134, and the processing unit 16, thereby improving the location service executing efficiency, shortening response time, and raising the efficiency of development.

### Apparatus Embodiment 2

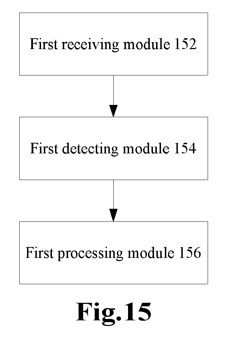

According to the embodiments of the present invention, there is provided an address duplication processing apparatus based on an integrated service access gateway, which is located in an integrated service access gateway. Fig. 15 is a structural block diagram of an address duplication processing apparatus according to Apparatus Embodiment 2 of the present invention. As shown in Fig. 15, the apparatus comprises: a first receiving module 152, a first detecting module 154, and a first processing module 156. The apparatus is used for the address duplication processing method of the method embodiments. The structure of the apparatus will be described hereinafter in detail.

The first receiving module 152 is configured to receive service request messages of multiple terminals, wherein the service request messages are service requests simultaneously initiated for addresses of the multiple terminals; the first detecting module 154, connected to the first receiving module 152, is configured to detect whether address duplication occurs regarding the addresses of the multiple terminals; and the first processing module 156, connected to the first detecting module 154, is configured to process the service request message according to a predetermined address duplication processing policy and return service abnormality and/a service processing result.

In the above embodiments of the present invention, the function of policy control and processing of user address duplication is added to the service logic processing module of the ISAG/Parlay X gateway. When the CP/SP service application uses the Web service interface of the Parlay X to invoke low-level terminal location positioning telecommunication service capabilities or when address duplication occurs in other services, the operators can perform a corresponding policy control and processing. In this way, the ISAG/Parlay X gateway can improve the efficiency of executing terminal location positioning services or other services. Moreover, codes do not need to be modified when the policy needs to be adjusted, and the direct modification of the corresponding policy can achieve the establishment of a new policy.

Obviously, those skilled in the art shall understand that individual modules and individual steps of the present invention can be implemented with general computing devices, they may be integrated in a single computing device or distributed in network formed by a plurality of computing devices, optionally, they may be implemented by using program codes executable by computing devices, thus they may be stored in memory devices for execution by the computing devices, or implemented by making them into integrated circuit module respectively, or by making several module or steps in to a single IC. Thus, the present invention is not limited to any particular combination of hardware and software.

## Claims

1. A method based on an integrated service access gateway, which is a Parlay X gateway, the integrated service access gateway providing a network service interface, the method comprising:
the network service interface of the integrated service access gateway receiving location operation requests for multiple terminals, wherein the location operation requests are location requests simultaneously initiated for addresses of the multiple terminals;
**characterised by** the method comprising:
the integrated service access gateway detecting whether a duplicate address occurs in the addresses of the multiple terminals; and
the integrated service access gateway judging that address duplication is allowed according to a location service policy and processing the location operation requests according to a predetermined address duplication processing policy, and returning a policy of address duplication abnormality event and/or location results via the network service interface, in a situation that address duplication occurs in the addresses of the multiple terminals.

2. The method according to Claim 1, **characterized in that** the integrated service access gateway judging the location operation requests according to a location service policy, wherein if the address duplication is not allowed, the policy of address duplication abnormality event is used,
wherein, the location service policy is determining whether the location operation supports the address duplication.

3. The method according to Claim 1, **characterized in that** the integrated service access gateway processing the location operation requests according to a predetermined address duplication processing policy, and the predetermined address duplication processing policy at least comprises one of the following: a first predetermined policy, a second predetermined policy, and a third predetermined policy; wherein
the first predetermined policy comprises: for a first address in a duplicate address sequence, sending the location request corresponding to the first address to a location center, receiving the location result returned by the location center, generating the policy of address duplication abnormality event for a subsequent duplicate address, and returning the location result and/or the policy of address duplication abnormality event;
the second predetermined policy comprises: for duplicate addresses, generating a new address sequence based on further parsing by a service logic processing module, sending location requests each corresponding to each address in the new address sequence to the location center, and receiving the returned location results; and
the third predetermined policy comprises: performing abnormality processing for the location operation requests and returning the policy of address duplication abnormality event.

4. The method according to Claim 3, **characterized in that**
in a case that the duplicate addresses are a telephone resource identifier or a session initiation protocol resource identifier which does not support a globally unified resource identifier, the method further comprises: judging whether terminals to which the duplicate addresses belong are terminals of a same user, wherein if it is determined to be yes, the location operation requests are processed according to the second predetermined policy; and
in a case that the duplicate addresses comprise a unique physical address of a terminal or a session initiation protocol resource identifier which supports a globally unified resource identifier, the location operation requests are processed according to the third predetermined policy.

5. The method according to any one of Claims 1 to 4, **characterized in that** the method further comprises: if the number of the location operation requests where duplicate addresses occur exceeds a predetermined threshold, an anti-fraud policy is initiated.

6. A location processing apparatus, for an integrated service access gateway, the location processing apparatus comprising:
a receiving unit (12), configured to receive location operation requests of multiple terminals, wherein the location operation requests are location requests initiated simultaneously for addresses of the multiple terminals;
**characterised by** the location processing apparatus comprising:
a detecting unit (14), configured to detect whether a duplicate address occurs in the addresses of the multiple terminals; and
a processing unit (16), configured to judge that address duplication is allowed according to a location service policy and process the location operation requests according to a predetermined address duplication processing policy, and return a policy of address duplication abnormality event and/or a location result, in a situation that address duplication occurs in the addresses of the multiple terminals.

7. The location processing apparatus according to Claim 6, **characterized in that** the processing unit (16) comprises:
a sending module (112), configured to send a location request corresponding to non-duplicate addresses to a location center and obtain the location results; an abnormality processing module (114), configured to perform abnormality processing for the duplicate address and generate the policy of address duplication abnormality event; and an output module (116), configured to output the location result and/or the policy of address duplication abnormality event.

8. The location processing apparatus according to Claim 6, **characterized in that** the processing unit (16) comprises:
a judging module (122), configured to judge whether the terminals to which the duplicate address belongs are terminals of a same user, wherein the duplicate address is a telephone resource identifier or a session initialization protocol resource identifier which does not support a globally unified resource identifier; a service execution module (124), configured to send location requests corresponding to each 23
address of the duplicate address to the location center and obtain a location result; and an outputting module (126), configured to output the location result.

9. The location processing apparatus according to Claim 6, **characterized in that**
the processing unit (16) is configured to perform abnormality processing on the location operation request and return a location abnormality information, wherein the duplicate address comprises a unique physical address of a terminal or a session initiation protocol resource identifier which supports a globally unified resource identifier.

10. The location processing apparatus according to any one of Claims 6 to 9, **characterized in that** the apparatus further comprises:
a counter (132), configured to count the number of location operation requests for the duplicate address; and
a security control unit (134), configured to initiate an anti-fraud policy in a case that a counted value of the counter exceeds a predetermined threshold.

## Patentansprüche

1. Verfahren auf der Basis eines integrierten Service-Zugangs-Gateway, das ein Parlay-X-Gateway ist, wobei das integrierte Service-Zugangs-Gateway eine Netzwerk-Service-Schnittstelle bereitstellt, wobei das Verfahren Folgendes beinhaltet:
Empfangen, durch die Netzwerk-Service-Schnittstelle des integrierten Service-Zugangs-Gateway, von Standortbetriebsanforderungen für mehrere Endgeräte, wobei die Standardbetriebsanforderungen Standardanforderungen sind, die gleichzeitig für Adressen der mehreren Endgeräte initiiert werden;
**dadurch gekennzeichnet, dass** das Verfahren Folgendes beinhaltet:
Erkennen, durch das integrierte Service-Zugangs-Gateway, ob eine Adressduplikation in den Adressen der mehreren Endgeräte auftritt; und
Beurteilen, durch das integrierte Service-Zugangs-Gateway, dass Adressduplikation gemäß einer Standort-Service-Richtlinie zulässig ist, und Verarbeiten der Standortbetriebsanforderungen gemäß einer vorbestimmten Adressduplikation-Verarbeitungsrichtlinie, und Zurückgeben einer Adressduplikation-Anormalitätsereignis-Richtlinie und/oder von Standortergebnissen über die Netzwerk-Service-Schnittstelle in einer Situation, in der Adressduplikation in den Adressen der mehreren Endgeräte auftritt.

2. Verfahren nach Anspruch 1, **dadurch gekennzeichnet, dass** das integrierte Service-Zugangs-Gateway die Standortbetriebsanforderungen gemäß einer Standort-Service-Richtlinie beurteilt, wobei, wenn die Adressduplikation nicht zulässig ist, die
Adressduplikation-Anormalitätsereignis-Richtlinie benutzt wird,
wobei die Standort-Service-Richtlinie feststellt, ob der Standortbetrieb die Adressduplikation unterstützt.

3. Verfahren nach Anspruch 1, **dadurch gekennzeichnet, dass** das integrierte Service-Zugangs-Gateway die Standortsbetriebsanforderungen gemäß einer vorbestimmten Adressduplikation-Verarbeitungsrichtlinie verarbeitet und die vorbestimmte Adressduplikation-Verarbeitungsrichtlinie wenigstens eines der Folgenden umfasst: eine erste vorbestimmte Richtlinie, eine zweite vorbestimmte Richtlinie und eine dritte vorbestimmte Richtlinie; wobei
die erste vorbestimmte Richtlinie Folgendes umfasst:
Senden, für eine erste Adresse in einer duplizierten Adressfolge, der Standardanforderung entsprechend der ersten Adresse zu einer Standortzentrale, Empfangen des von der Standortzentrale zurückgesandten Standortergebnisses,
Erzeugen der Adressduplikation-Anormalitätsereignis-Richtlinie für eine nachfolgende duplizierte Adresse und Zurückgeben des Standortergebnisses und/oder der Adressduplikation-Anormalitätsereignis-Richtlinie;
die zweite vorbestimmte Richtlinie Folgendes umfasst: Erzeugen, für duplizierte Adressen, einer neuen Adressequenz auf der Basis eines weiteres Parsing durch ein Service-Logik-Verarbeitungsmodul, Senden von Standortanforderungen jeweils entsprechend jeder Adresse in der neuen Adresssequenz zu der Ortszentrale, und Empfangen der zurückgegebenen Standortergebnisse; und
die dritte vorbestimmte Richtlinie Folgendes umfasst: Durchführen von Anormalitätsverarbeitung für die Standortbetriebsanforderungen und Zurückgeben der Adressduplikation-Anormalitätsereignis-Richtlinie.

4. Verfahren nach Anspruch 3, **dadurch gekennzeichnet, dass**:
in einem Fall, in dem die duplizierten Adressen eine Telefonressourcenkennung oder eine Sitzungseinleitungsprotokoll-Ressourcenkennung sind, die keine global vereinigte Ressourcenkennung unterstützt, das Verfahren ferner Folgendes beinhaltet: Beurteilen, ob Endgeräte, zu denen die duplizierten Adressen gehören, Endgeräte eines selben Benutzers sind, wobei, wenn festgestellt wird, dass dies der Fall ist, die Standortbetriebsanforderungen gemäß der zweiten vorbestimmten Richtlinie verarbeitet werden; und
in einem Fall, in dem die duplizierten Adressen eine eindeutige physische Adresse eines Endgeräts oder eine Sitzungseinleitungsprotokoll-Ressourcenkennung umfassen, die eine global vereinigte Ressourcenkennung unterstützt, die Standortbetriebsanforderungen gemäß der dritten vorbestimmten Richtlinie verarbeitet werden.

5. Verfahren nach einem der Ansprüche 1 bis 4,
**dadurch gekennzeichnet, dass** das Verfahren ferner Folgendes beinhaltet: Einleiten, wenn die Anzahl der Standortbetriebsanforderungen, in denen duplizierte Adressen auftreten, eine vorbestimmte Schwelle übersteigt, einer Betrugsbekämpfungsrichtlinie.

6. Standortverarbeitungsvorrichtung für ein integriertes Service-Zugangs-Gateway, wobei die Standortverarbeitungsvorrichtung Folgendes umfasst:
eine Empfangseinheit (12), konfiguriert zum Empfangen von Standortbetriebsanforderungen von mehreren Endgeräten, wobei die Standortbetriebsanforderungen Standortanforderungen sind, die gleichzeitig für Adressen der mehreren Endgeräte eingeleitet werden;
**dadurch gekennzeichnet, dass** die Standortverarbeitungsvorrichtung Folgendes umfasst:
eine Detektiereinheit (14), konfiguriert zum Detektieren, ob eine Adressduplikation in den Adressen der mehreren Endgeräte auftritt; und
eine Verarbeitungseinheit (16), konfiguriert zum Beurteilen, ob Adressduplikation gemäß einer Standort-Service-Richtlinie zulässig ist, und Verarbeiten der Standortbetriebsanforderungen gemäß einer vorbestimmten Adressduplikation-Verarbeitungsrichtlinie, und Zurückgeben eines Adressduplikation-Anormalitätsereignis-Richtlinie und/oder eines Standortergebnisses in einer Situation, in der eine Adressduplikation in den Adressen der mehreren Endgeräte auftritt.

7. Standortverarbeitungsvorrichtung nach Anspruch 6, **dadurch gekennzeichnet, dass** die Verarbeitungseinheit (16) Folgendes umfasst:
ein Sendemodul (112), konfiguriert zum Senden einer Standortanforderung entsprechend nicht duplizierten Adressen zu einer Standortzentrale und Einholen der Standortergebnisse; ein Anormalitätsverarbeitungsmodul (114), konfiguriert zum Ausführen von Anormalitätsverarbeitung für die duplizierte Adresse und zum Erzeugen der Adressduplikation-Anormalitätsereignis-Richtlinie; und ein Ausgabemodul (116), konfiguriert zum Ausgeben des Standortergebnisses und/oder der Adressduplikation-Anormalitätsereignis-Richtlinie.

8. Standortverarbeitungsvorrichtung nach Anspruch 6, **dadurch gekennzeichnet, dass** die Verarbeitungseinheit (16) Folgendes umfasst:
ein Beurteilungsmodul (122), konfiguriert zum Beurteilen, ob die Endgeräte, zu denen die duplizierte Adresse gehört, Endgeräte eines selben Benutzers sind, wobei die duplizierte Adresse eine Telefonressourcenkennung oder eine Sitzungseinleitungsprotokoll-Ressourcenkennung ist, die keine global vereinigte Ressourcenkennung unterstützt; ein Service-Ausführungsmodul (124), konfiguriert zum Senden von Standortanforderungen entsprechend jeder Adresse der duplizierten Adresse zu der Standortzentrale und zum Einholen eines Standortergebnisses; und ein Ausgabemodul (126), konfiguriert zum Ausgeben des Standortergebnisses.

9. Standortverarbeitungsvorrichtung nach Anspruch 6, **dadurch gekennzeichnet, dass**
die Verarbeitungseinheit (16) zum Durchführen von Anormalitätsverarbeitung an der Standortbetriebsanforderung und zum Zurückgeben einer Standortanormalitätsinformation konfiguriert ist, wobei die duplizierte Adresse eine eindeutige physische Adresse eines Endgeräts oder eine Sitzungseinleitungsprotokoll-Ressourcenkennung ist, die eine global vereinigte Ressourcenkennung unterstützt.

10. Standortverarbeitungsvorrichtung nach einem der Ansprüche 6 bis 9, **dadurch gekennzeichnet, dass** die Vorrichtung ferner Folgendes umfasst:
einen Zähler (132), konfiguriert zum Zählen der Anzahl von Standortbetriebsanforderungen für die duplizierte Adresse; und
eine Sicherheitssteuereinheit (134), konfiguriert zum Einleiten einer Betrugsbekämpfungsrichtlinie in einem Fall, in dem ein gezählter Wert des Zählers eine vorbestimmte Schwelle übersteigt.

## Revendications

1. Procédé basé sur une passerelle d'accès à des services intégrés, laquelle est une passerelle Parlay X, la passerelle d'accès à des services intégrés fournissant une interface de service réseau, le procédé comprenant :
la réception par l'interface de service réseau de la passerelle d'accès à des services intégrés de requêtes d'opération de localisation de multiples terminaux, dans lequel les requêtes d'opération de localisation sont des requêtes de localisation lancées simultanément pour des adresses des multiples terminaux ;
**caractérisé en ce que** le procédé comprend :
la détection par la passerelle d'accès à des services intégrés qu'une adresse dupliquée survient ou non dans les adresses des terminaux multiples ; et
par la passerelle d'accès à des services intégrés, le jugement qu'une duplication d'adresse est autorisée conformément à une stratégie de service de localisation et le traitement des requêtes d'opération de localisation conformément à une stratégie de traitement de duplication d'adresse prédéterminée, et le renvoi d'une stratégie d'événement d'anomalie de duplication d'adresse et/ou de résultats de localisation par l'intermédiaire de l'interface de service réseau, quand une duplication d'adresse survient dans les adresses des multiples terminaux.

2. Procédé selon la revendication 1, **caractérisé en ce que** la passerelle d'accès à des services intégrés juge les requêtes d'opération de localisation conformément à une stratégie de service de localisation, dans lequel si la duplication d'adresse n'est pas autorisée, la stratégie d'événement d'anomalie de duplication d'adresse est utilisée,
dans lequel, la stratégie de service de localisation détermine que l'opération de localisation prend en charge ou non la duplication d'adresse.

3. Procédé selon la revendication 1, **caractérisé en ce que** la passerelle d'accès à des services intégrés traite les requêtes d'opération de localisation conformément à une stratégie de traitement de duplication d'adresse prédéterminée, et la stratégie de traitement de duplication d'adresse prédéterminée comprend au moins l'une des stratégies suivantes : une première stratégie prédéterminée, une deuxième stratégie prédéterminée, et une troisième stratégie prédéterminée ; dans lequel
la première stratégie prédéterminée comprend : pour une première adresse dans une séquence d'adresses indiquée, l'envoi de la requête de localisation correspondant à la première adresse à un centre de localisation, la réception du résultat de localisation renvoyé par le centre de localisation, la génération de la stratégie d'événement d'anomalie de duplication d'adresse pour une adresse dupliquée suivante, et le renvoi du résultat de localisation et/ou de la stratégie d'événement d'anomalie de duplication d'adresse ;
la deuxième stratégie prédéterminée comprend : pour des adresses dupliquées, la génération d'une nouvelle séquence d'adresses en fonction en outre d'une analyse syntaxique par un module de traitement logique de service, l'envoi de requêtes de localisation correspondant chacune à chaque adresse dans la nouvelle séquence d'adresses au centre de localisation, et la réception des résultats de localisation envoyés ; et
la troisième stratégie prédéterminée comprend :
l'exécution d'un traitement d'anomalie pour les requêtes d'opération de localisation et le renvoi de la stratégie d'événement d'anomalie de duplication d'adresse.

4. Procédé selon la revendication 3, **caractérisé en ce que**
si les adresses dupliquées sont un identifiant de ressource téléphonique ou un identifiant de ressource de protocole de lancement de session qui ne prend pas en charge un identifiant de ressource globalement unifié, le procédé comprend en outre : le jugement que des terminaux auxquels appartiennent les adresses dupliquées sont ou non des terminaux d'un même utilisateur, dans lequel si la détermination est positive, les requêtes d'opération de localisation sont traitées conformément à la deuxième stratégie prédéterminée ; et
si les adresses dupliquées comprennent une adresse physique unique d'un terminal ou un identifiant de ressource de protocole de lancement de session qui prend en charge un identifiant de ressource globalement unifié, les requêtes d'opération de localisation sont traitées conformément à la troisième stratégie prédéterminée.

5. Procédé selon l'une quelconque des revendications 1 à 4, **caractérisé en ce que** le procédé comprend en outre :
si le nombre des requêtes d'opération de localisation pour lesquelles surviennent des adresses dupliquées dépasse un seuil prédéterminé, une stratégie anti-fraude est lancée.

6. Appareil de traitement de localisation, pour une passerelle d'accès à des services intégrés, l'appareil de traitement de localisation comprenant :
une unité de réception (12), configurée pour recevoir des requêtes d'opération de localisation de multiples terminaux, dans lequel les requêtes d'opération de localisation sont des requêtes de localisation lancées simultanément pour des adresses des multiples terminaux ;
**caractérisé en ce que** l'appareil de traitement de localisation comprend :
une unité de détection (14), configurée pour détecter qu'une adresse dupliquée survient ou non dans les adresses des multiples terminaux ; et
une unité de traitement (16), configurée pour juger qu'une duplication d'adresse est autorisée conformément à une stratégie de service de localisation et traiter les requêtes d'opération de localisation conformément à une stratégie de traitement de duplication d'adresse prédéterminée, et renvoyer une stratégie d'événement d'anomalie de duplication d'adresse et/ou un résultat de localisation, quand une duplication d'adresse survient dans les adresses des multiples terminaux.

7. Appareil de traitement de localisation selon la revendication 6, **caractérisé en ce que** l'unité de traitement (16) comprend :
un module d'envoi (112), configuré pour envoyer une requête de localisation correspondant à des adresses non dupliquées à un centre de localisation et obtenir les résultats de localisation ; un module de traitement d'anomalie (114), configuré pour exécuter un traitement d'anomalie pour l'adresse dupliquée et générer la stratégie d'événement d'anomalie de duplication d'adresse ; et un module de sortie (116), configuré pour produire en sortie le résultat de localisation et/ou la stratégie d'événement d'anomalie de duplication d'adresse.

8. Appareil de traitement de localisation selon la revendication 6, **caractérisé en ce que** l'unité de traitement (16) comprend :
un module de jugement (122), configuré pour juger que les terminaux auxquels appartiennent les adresses dupliquées sont ou non des terminaux d'un même utilisateur, dans lequel l'adresse dupliquée est un identifiant de ressource téléphonique ou un identifiant de ressource de protocole de lancement de session qui ne prend pas en charge un identifiant de ressource globalement unifié ; un module d'exécution de services (124), configuré pour envoyer des requêtes de localisation correspondant à chaque adresse de l'adresse dupliquée au centre de localisation et obtenir un résultat de localisation ; et un module de sortie (126), configuré pour produire en sortie le résultat de localisation.

9. Appareil de traitement de localisation selon la revendication 6, **caractérisé en ce que**
l'unité de traitement (16) est configurée pour exécuter un traitement d'anomalie sur la requête d'opération de localisation et renvoyer une information d'anomalie de localisation, dans lequel l'adresse dupliquée comprend une adresse physique unique d'un terminal ou un identifiant de ressources de protocole de lancement de session qui prend en charge un identifiant de ressource globalement unifié.

10. Appareil de traitement de localisation selon l'une quelconque des revendications 6 à 9, **caractérisé en ce que** l'appareil comprend en outre :
un compteur (132), configuré pour compter le nombre de requêtes d'opération de localisation pour l'adresse dupliquée ; et
une unité de commande de sécurité (134), configurée pour lancer une stratégie anti-fraude si une valeur comptée du compteur dépasse un seuil prédéterminé.
